# EUROPEAN PATENT SPECIFICATION

(11) **EP 3 578 947 B1**
(45) Date of publication and mention of the grant of the patent: **05.05.2021**
(21) Application number: 19178716.7
(22) Date of filing: 06.06.2019
(51) Int. Cl.: G01M 11/00, H04B 10/073

(54) **MULTI-PORT MULTI-CHANNEL RECONFIGURABLE FIBER DISPERSION REFERENCE MODULE**
REKONFIGURIERBARES FASERDISPERSIONSREFERENZMODUL MIT MEHREREN ÖFFNUNGEN UND MEHREREN KANÄLEN
MODULE DE RÉFÉRENCE DE DISPERSION DE FIBRES RECONFIGURABLES MULTICANAUX MULTIPORTS

(30) Priority: 06.06.2018 US 201862681289 P; 04.06.2019 US 201916431068
(43) Date of publication of application: 11.12.2019
(73) Proprietor: Panduit Corp, Tinley Park IL 60487 (US)
(72) Inventor: CASTRO, Jose M., Naperville, IL Illinois 60565 (US); PIMPINELLA, Richard J., Frankfort, IL Illinois 60423 (US); NOVICK, Asher S., Chicago, IL Illinois 60661 (US); HUANG, Yu, Orland Park, IL Illinois 60462 (US); KOSE, Bulent, Burr Ridge, IL Illinois 60527 (US); HARTMAN, Scott R., Oak Forest, IL Illinois 60452 (US); MATCHA, Andrew R., Chicago, IL Illinois 60638 (US)
(74) Representative: Morrall, Jonathan Ian McLachlan

(56) References cited:
- EP-A1- 3 240 209
- WO-A2-2006/052599
- US-A1- 2009 072 838

## Description

### Cross Reference to Related Application

This application claims priority to U.S. Provisional Application No. 62/681,289, filed June 6, 2018.

The present disclosure relates in general to the field of optical fibers and more specifically, to a multimode fiber (MMF) designed for worst-case channel bandwidth due to the modal-chromatic dispersion interaction, useful for the performance evaluation of transceivers. The disclosure also relates to SMF channels, where different lengths of fibers designed to have different cut-off wavelengths, and or different zero dispersion wavelengths to provide minimum compliant bandwidth.

The majority of optical channels utilized in data center networks (DCN), local area networks (LAN), and storage area networks (SAN), utilize VCSEL-based transceivers and multimode fiber. Commercially available VCSEL transceivers, with emission wavelengths typically around 850 nm ± 10 nm, currently support baud rates up to 28.05 GBd and higher. Commercially available laser optimized multimode fibers, OM3 and OM4 have minimum effective modal bandwidths of 2000 and 4700 MHz·km, respectively.

In order to guarantee the performance ofVCSEL-MMF communication channels, standard organizations such as IEEE 802.3 and INCITS T11 specify the worst-case operational parameters for the transceivers and fiber channel links. In practice, it is known by those skilled in the art, using the worst MMF characteristic to evaluate transceivers in high volume manufacturing is challenging. One limitation is caused by the manufacturing variability and low yield for fibers with bandwidth within the critical region defined as the worst-case channel. This can be solved provided an effective selection method is utilized European patent EP3240209 shows a fiber reference dispersion module.

However, the most important channel limitation is caused by an incomplete description of the fiber dispersion phenomena in the link models utilized in the estimation of worst-case channels. The link models utilized in industry standards assume that the modal and chromatic dispersions do not interact and therefore the sign of the MMF differential mode delay (DMD) does not have an effect on the performance of the channel. The inventors of this application realized that this theoretical approach is inconsistent with experiments.

In the case of SMF channels operating in the single mode regime and low chromatic dispersion region, longer reaches can be achieved. However, SMF transmission performance at higher serial baud rates ≥50 GBd can be degraded due to multipath interference (MPI), chromatic dispersion and/or cut off wavelength impairments. To test transceivers under worst case condition, channels including fiber with different chromatic characteristics, number of connectors (exacerbate MPI) are required.

The apparatus disclosed enable efficient and repeatable test methods to provide multichannel testing and facilitate evaluation and selection of transceivers at different stages of design or production.

### Summary

The present disclosure relates to an apparatus comprising a worst case multimode or single fiber of different characteristics or different lengths. In the case of the MMF apparatus, it can include a set of minimally compliant effective modal bandwidth, maximum channel length, as described. For the MMF embodiment, in accordance with the present disclosure comprises a core and clad material system, where the alpha parameter (a-parameter), which defines the refractive index profile, produces positive relative mode group delays. The new shape of the refractive index profile is designed to provide worst-case EMB, while consistently exacerbating chromatic dispersion and mode partition noise and therefore, provides the worst-case optical channel media for testing VCSEL-based transceivers.

Applications, such as transceiver instrumentation/device calibration and optical path length equalization for high- speed stock trading, require characterized fibers of known lengths. The disclosure described is a Multi-Port/ Multi-Channel Reconfigurable Fiber Dispersion Reference Module (MM-FDRM), which is a device designed to contain one or more fiber organizers containing fibers of different characteristics or different lengths. Multiple organizers can be placed on a single rotational axis to form what is referred to herein as a fiber drum, having associated paired input and output ports. The MM-FDRM also contains such means for securing and rotating said Fiber Drum when unlocked.

### Brief Description of the Figures

Fig. 1 shows a fiber dispersion reference module with a single port.
Fig. 2 shows a magnified view of the optical connections of the fiber dispersion reference module of Fig. 1.
Fig. 3 shows one method of rotating the inner element of the fiber dispersion reference module of Fig. 1.
Fig. 4 shows an alternate method of rotating the inner rotating element of the fiber dispersion reference module of Fig. 1.
Fig. 5 shows a fiber dispersion reference module with two mandrels of differing diameters.
Fig. 6 shows a fiber dispersion reference module with multiple fiber organizers which can be moved independently
Fig. 7 shows a fiber dispersion reference module with multiple fiber organizers which are moved in unison.
Fig. 8 shows a fiber dispersion reference module capable of utilizing a length of fiber external to the housing apparatus.
Fig. 9 shows a multiport version of the fiber dispersion reference module of Fig. 8.

### Detailed Description

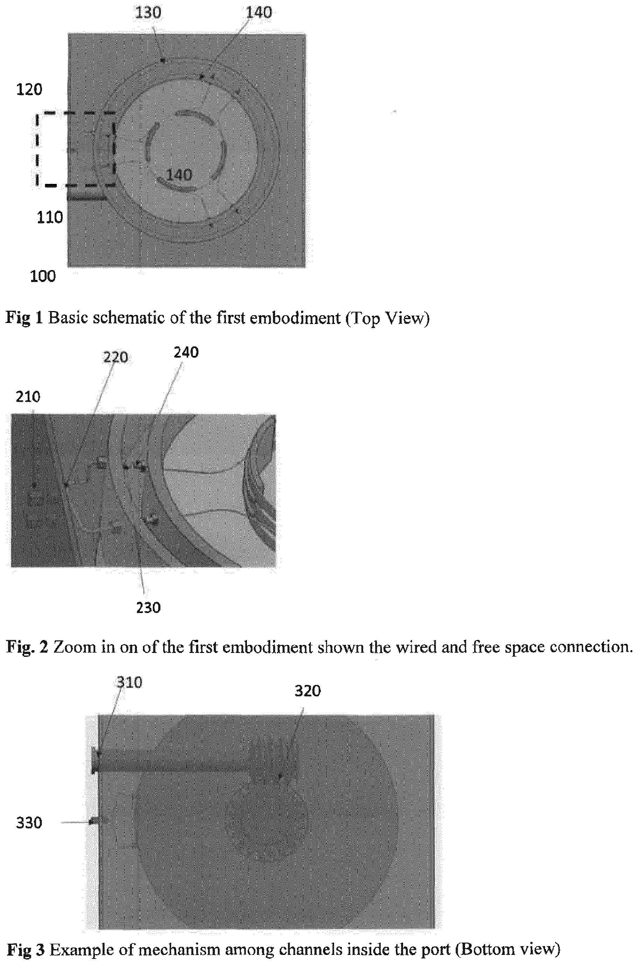

Several embodiments depicted in Figures 1-8 are examples of the present disclosure illustrating the functionalities of said MM-FDRM. Fig. 1 shows the conceptual design for fiber dispersion reference module having one port according to the present disclosure. This apparatus can provide 3 channels, each comprising a fiber of different length or optical properties. The apparatus can have an enclosure **100** which can be mounted within a standard data center rack. Depending on the length of fiber, it can occupy one or several rack units (RU). A mechanical or electrical handle 110 can enable the switching between channels.

Fig. 2 shows a section of the device 120 that enables input and output optical coupling to multimode or single mode channel fibers. A cylinder or partial cylinder inside enclosure **130,** surrounds the inner rotating element or fiber organizer **140,** which in this example contains 3-fiber links.

Fig. 2 shows a port fiber connector 210 and adaptor 220 . This port can utilize standard duplex or parallel optics connectivity such as LC, SC, FC, ST, MPO, MTP, or other optical coupling means. The ports **220** (front face) and **230** (cylinder) can be connected using a short fiber patch cord, or by free space coupling. Alternatively, the design can be modified to merge the connectors 220, 230. The coupling between connectors **230** and **240** is implemented using free space optics. These short links, on the order of millimeters, can utilize collimating lenses, diffractive optics elements, or other free space bulk optical elements.

The switching features of the device are enabled by the rotation of the fiber organizer, **140** in Fig. 1, at determined angles, e.g., +/- 120 degrees. Increasing the number of channels is feasible by reducing the angular separation among ports. The fiber samples are placed in the organizers using arbitrary paths. In the example shown here, they are coiled in a mandrel(s) with a specified radius of curvature. The curvature of said fiber organizer depends on several factors such as the length and type of the fiber, and the required test specifications. In some applications, the mandrel radius of curvature might be designed to minimize bending losses. In other applications, it might be designed to impact the fiber cutoff wavelength and to produce or eliminate cladding modes. Additional connectors can be added within **140,** to exacerbate multipath interference or total insertion loss. Alternatively, the fiber can be bent in such a way to produce mode mixing in order to modify the encircle flux or spatial spectral distribution of the optical modes.

Additional features, such as mechanical stops can be included in **130** and/or **140** to enable rotation only at fixed angles and to minimize coupling losses. Fig 3. illustrates one exemplary mechanism to rotate the fiber organizer. This rotation can be implemented mechanically or electrically. A locking mechanism, password, or key can be used to avoid undesired or unintentional switching.

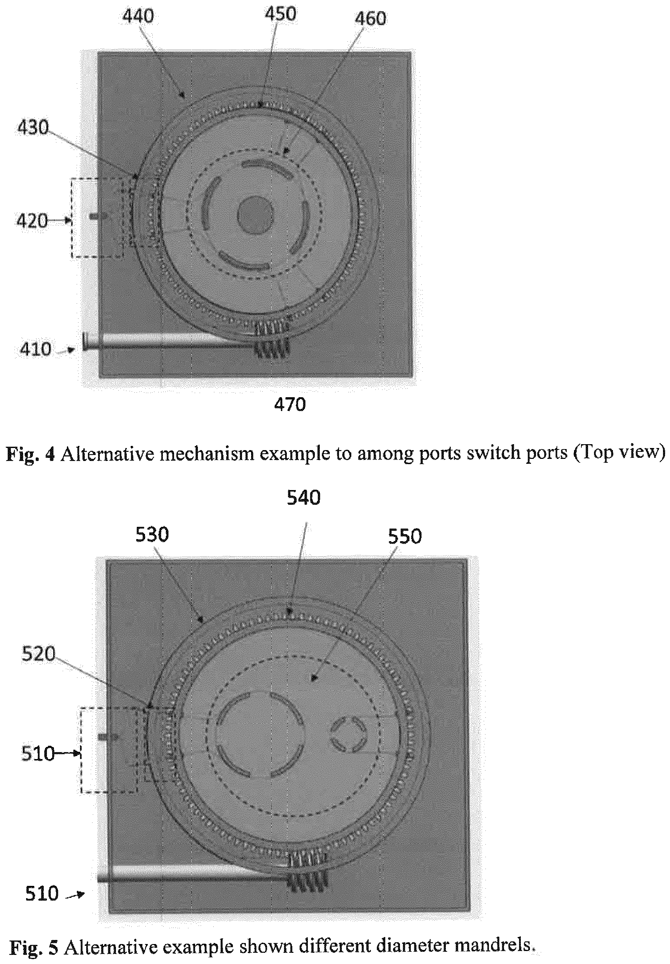

Fig. 4 shows an alternate rotation mechanism. All other components are similar to the previous described embodiment. In this example, the rotation mechanism **410** is a rotating dial or button, **420** shows the input output ports. The external cylinder and device housing are labeled **430** and **440** respectively. The fiber organizing element comprising the bend radius limiter is labeled **450.** Fig. 5 illustrates an example of the present disclosure having two input/output ports and two bend radius limiters of different diameters.

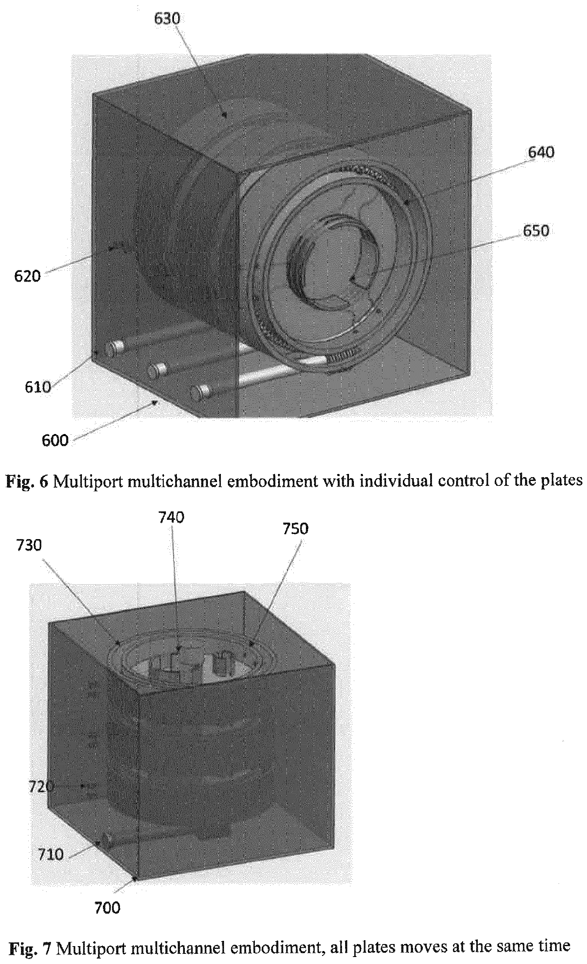

Fig. 6 and Fig. 7 show embodiments for a multiport multichannel implementation. Both devices expand the dimensionality of embodiments shown previously enabling multiple ports operation. In those figures **600,700** represent the enclosure, **620,720** the ports, **630,730** the external cylinders, and **640,740** the rotating fiber organizers. In the embodiment shown in Fig. 6, the fiber organizers can move independently providing more flexibility in the selection of the channels. In the embodiment shown in Fig. 7 all the organizers rotate at the same time.

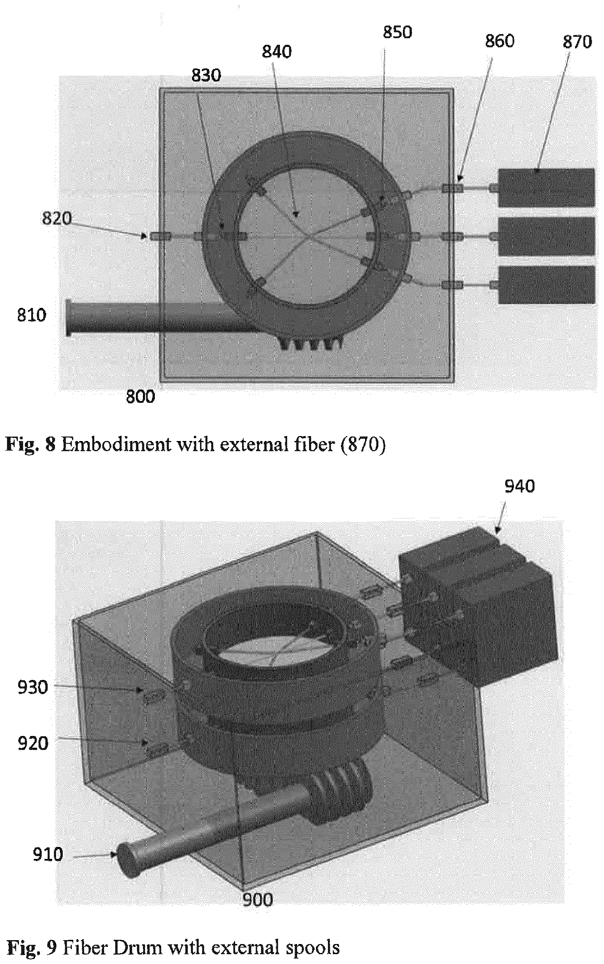

The form factor and size of previous illustrated embodiments of the present disclosure could limit the maximum length of fiber stored within the fiber organizer and therefore, could reduce the usefulness for testing SMF channels. To overcome this potential limitation, an alternative embodiment, utilizing an arbitrary length of fiber external to the housing of said apparatus. In Fig. 8, **800** is an outer enclosure, **810** is a mechanical dial or button to switch the channels, **840** are the input/output ports terminated with LC, SC, MPO, MTP, or any other type of connectors. The free space link **830** between the cylinder and rotating fiber organizer is also shown in Fig. 8. In this example, when the fiber is rotated +/- 120 degrees, the light is redirected to different output ports, **860,** and from there to extended or different fiber links, **870.** The input and output port, **820** and all **860,** are full duplex links. Therefore, transceiver signals can be switched to different channels enabling the testing different configurations.

Fig. 9 illustrates a multi-port configuration of the previous embodiments. In this configuration, **910** is the rotating mechanism for the fiber organizers. In this configuration, all organizers rotate at the same time. However, it can be modified to enable independent organizer rotations as shown in Fig. 6. In these examples only ports **930** and **940,** and six fiber links are shown in enclosure, **900.** However, it is understood that the number of ports and the number of channels can be increased arbitrarily depending on available space.

While particular embodiments and applications of the present disclosure have been illustrated and described, it is to be understood that the disclosure is not limited to the precise construction and compositions disclosed herein and that various modifications, changes, and variations may be apparent from the foregoing without departing from the scope of the disclosure as described and defined in the claims.

## Claims

1. A fiber dispersion reference module comprising:
an enclosure with at least one fiber optic port; and **characterized by**
at least one inner rotating element, each element having a plurality of channel fibers, the enclosure and inner rotating element configured such that the rotation of the inner rotating element relative to the enclosure allows the fiber optic port of the enclosure to change its coupling between the plurality of channels in the inner rotating element.

2. The fiber dispersion reference module of claim 1 wherein each port of the at least one port of the enclosure is coupled to a channel in the at least one inner rotating element via free space optics.

3. The fiber dispersion reference module of claim 1 or 2 wherein at least one inner rotating element comprises a plurality of inner rotating elements.

4. The fiber dispersion reference module of claim 3 wherein each inner rotating element of the plurality of inner rotating elements rotates independently.

5. The fiber dispersion reference module of claim 3 wherein the plurality of inner rotating elements rotate in unison.

6. The fiber dispersion reference module of any preceding claim wherein the inner rotating element has a plurality of mandrels, each with a different diameter.

## Patentansprüche

1. Faserdispersionsreferenzmodul, umfassend:
ein Gehäuse mit mindestens einem Glasfaseranschluss; und **gekennzeichnet durch**
mindestens einem inneren rotierenden Element, wobei jedes Element eine Vielzahl von Kanalfasern aufweist, wobei das Gehäuse und das innere rotierende Element so ausgelegt sind, dass die Drehung des inneren rotierenden Elements relativ zum Gehäuse es dem Faseroptikanschluss des Gehäuses ermöglicht, seine Kopplung zwischen der Vielzahl von Faserkanälen im inneren rotierenden Element zu ändern.

2. Faserdispersionsreferenzmodul gemäß Anspruch 1, wobei jeder Anschluss des mindestens einen Anschlusses des Gehäuses über eine Freiraumoptik mit einem Faserkanal in dem mindestens einen inneren rotierenden Element gekoppelt ist.

3. Faserdispersionsreferenzmodul gemäß Anspruch 1 oder 2, wobei mindestens ein inneres rotierendes Element eine Vielzahl von inneren rotierenden Elementen umfasst.

4. Faserdispersionsreferenzmodul gemäß Anspruch 3, wobei jedes innere rotierende Element der Vielzahl von inneren rotierenden Elementen unabhängig rotiert.

5. Faserdispersionsreferenzmodul gemäß Anspruch 3, wobei die Vielzahl der inneren rotierenden Elemente im Gleichtakt rotieren.

6. Faserdispersionsreferenzmodul gemäß einem vorhergehenden Anspruch, wobei das innere rotierende Element eine Vielzahl von Dornen mit jeweils unterschiedlichem Durchmesser aufweist.

## Revendications

1. Module de référence de dispersion de fibres comprenant :
une enceinte comportant au moins un port de fibre optique ; et **caractérisé par**
au moins un élément rotatif interne, chaque élément ayant une pluralité de fibres de canaux, l'enceinte et l'élément rotatif interne étant conçus de sorte que la rotation de l'élément rotatif interne par rapport à l'enceinte permette au port de fibre optique de l'enceinte de modifier son couplage entre la pluralité de canaux de fibres dans l'élément rotatif interne.

2. Module de référence de dispersion de fibres selon la revendication 1, dans lequel chaque port de l'au moins un port de l'enceinte est couplé à un canal de fibres dans l'au moins un élément rotatif interne par le biais d'éléments optiques en espace libre.

3. Module de référence de dispersion de fibres selon la revendication 1 ou 2, dans lequel au moins un élément rotatif interne comprend une pluralité d'éléments rotatifs internes.

4. Module de référence de dispersion de fibres selon la revendication 3, dans lequel chaque élément rotatif interne de la pluralité d'éléments rotatifs internes tourne indépendamment.

5. Module de référence de dispersion de fibres selon la revendication 3, dans lequel les éléments rotatifs de la pluralité d'éléments rotatifs internes tournent à l'unisson.

6. Module de référence de dispersion de fibres selon l'une quelconque des revendications précédentes, dans lequel l'élément rotatif interne comporte une pluralité de mandrins, chacun présentant un diamètre différent.
